# EUROPEAN PATENT SPECIFICATION

(11) **EP 3 413 302 B1**
(45) Date of publication and mention of the grant of the patent: **08.10.2025**
(21) Application number: 18175859.0
(22) Date of filing: 04.06.2018
(51) Int. Cl.: B32B 5/02, B32B 5/18, B32B 5/24, B32B 5/26, B32B 5/32, B32B 7/02, B32B 7/04, B32B 7/08, B32B 7/12, B32B 27/06, B32B 27/08, B32B 27/12, B32B 27/32, B32B 27/34, B32B 27/36, B32B 27/40, G10K 11/168

(54) **SOUND ATTENUATION SHEET**
SCHALLSCHUTZFOLIE
FEUILLE D'ATTÉNUATION SONORE

(30) Priority: 05.06.2017 GB 201708937
(43) Date of publication of application: 12.12.2018
(73) Proprietor: Pritex Limited, Cheltenham, Gloucestershire GL50 3SH (GB)
(72) Inventor: THURGOOD, David, Taunton, Somerset TA21 8NN (GB); HARRISON, Roy, Taunton, Somerset TA21 8NN (GB)
(74) Representative: Script Intellectual Property LLP

(56) References cited:
- WO-A1-2011/013427
- WO-A1-2012/006663
- GB-A- 2 200 591
- US-A- 2 081 765
- US-A1- 2001 036 788
- US-A1- 2007 137 926
- US-A1- 2008 001 431
- US-A1- 2008 251 198

## Description

The present invention relates to sound attenuation sheets, to methods of producing such sound attenuation sheets and to methods of noise reduction.

Sound attenuation (also known as noise reduction) systems can contain components that achieve sound absorption and/or sound transmission loss. Often, sound attenuation systems, especially for automotive applications, involve a sound insulating heavy layer and a foam or felt sound absorbing layer (in a spring-mass decoupled isolator system). The foam or felt layer acts as an elastic spring and the heavy layer acts as the mass of an acoustic spring-mass-system. The heavy layer may be a mat or moulded part made of polymer which may contain a filler, for example barium sulfate or calcium carbonate. The heavy layer has a relatively high density and therefore such systems have a high mass per unit area that may be between 4 and 8 kg/m² or higher.

For further noise reduction, separate noise absorption components to absorb the remaining unwanted airborne noise may also be used. A number of solutions have been proposed using cavities or open cells in one or more of the layers of a sound absorbing panel.

GB-A-2 066 730A discloses a sound-absorbing panel comprising a honeycomb core having cavities bonded to non-porous panels. The panels are formed from a flexible membrane whose naturally frequency of vibration is the same as the frequency of vibration of the membrane in combination with a cavity in the honeycomb core and the standing wave natural frequency of the cavity itself.

WO-A-2012/006663 discloses a multi-layered acoustic panel including an air impermeable outer membrane layer, an intermediate layer, and an inner layer having a plurality of apertures covered by the intermediate layer. Those portions of the membrane layer which overlie the apertures are free to vibrate.

WO-A-92/012855 discloses a noise attenuation panel for an aero engine with a first cellular component part and a second cellular component part in the form of an open-celled structure having a multiplicity of intercommunicating cells.

Sound attenuation is an important factor in automotive design. The choice of a particular sound attenuating system for a given application is determined by its ability to attenuate sound, by cost, weight, thickness, fire resistance, and other properties. Recently, weight reduction in automotive applications has become more important, in particular to improve fuel economy.

US-A-2014/0124290 discloses a sound insulator including a sound absorption layer and an air-impermeable resonance layer, which are bonded to each other *via* an adhesive layer. The sound absorption layer has a thickness in a range of 5 to 50 mm, an area-weight of less than 2000 g/m² and a two-layer structure of a high-density sound absorption layer and a low-density sound absorption layer. The high-density sound absorption layer is bonded to the air-impermeable resonance layer *via* the adhesive layer. The low-density sound absorption layer is bonded to the other face of the high-density sound absorption layer *via* an adhesive layer.

US-A-2010/0065366 discloses a lightweight sound insulating lining for a body component of a motor vehicle, in particular in the form of a lightweight front wall lining, comprising a sound absorbing layer, a sound insulating layer which is directly connected to the sound absorbing layer and substantially air-tight, as well as an adjoining foam layer. The sound insulating layer is formed by an integral skin layer of the foam layer and is integrally joined to the porous absorber by back-foaming the porous absorber.

US-A-2006/0113146 discloses an ultra-light, noise reducing composite that comprises an acoustically transparent, lightweight film between an underlay layer and an air flow resistance layer.

US-A-2007/0144829 discloses an ultra-light sound insulator composed of a felt single sheet thermoformed of cotton and binder fibres which are tangled and contacted and jointed to each other in a random manner. The ratio of the stiffness of the vehicle interior side surface to that of the vehicle exterior side surface is in a range of 1.1 to 10. The single sheet also has an area of gradually-decreasing stiffness that extends between the surfaces.

US-A-2007/137926 discloses an acoustical component comprising an air impermeable inner covering layer having a sound reflective surface and one or more perforations to permit the passage of sound therethrough. An outer sound absorbing layer is bonded to the inner covering layer for absorbing the sound passing through the perforations in the inner covering layer.

GB 2 200 591 discloses a sound attenuating material comprising a base pad of fibrous material faced on at least one side with an intermediate sheet, the pad and intermediate sheet(s) being held together by stitching.

US-A-2001/036788 discloses a headliner made from a laminate comprising a core layer sandwiched between two stiffening layers to form an I-beam construction that provides the necessary strength for the headliner.

US-A-2008/001431 discloses a sound insulation construction including a first layer and a second layer.

EP-A- 1182087 discloses a sound absorbing-insulating structure for vehicles comprising a sound absorbing layer of cellulose fibres and synthetic resin. This sound absorbing-insulating structure has good sound absorbing-insulating characteristics and is light in weight and inexpensive in cost.

US2081765 discloses acoustical material that comprises an outermost sheet that is as little sound reflecting as practicable and is relatively sound permeable, and inner sheets that are resonant to the sound and are capable of vibrating, the resonant sheets, however, being so arranged that the vibrations are damped to absorb the energy of vibration and thereby to absorb the sound. All sheets are loosely connected together at relatively spaced intervals by suitable means as the lines of stitching, the stitching loops being loose so that the various sheets are not drawn tightly together.

WO201200663 discloses a multilayered acoustic panel including: a substantially air impermeable outer membrane layer; an underlying second portion bonded to the membrane layer, the second portion including an intermediate layer; and an inner layer underlying the second portion, the inner layer having a plurality of apertures therein, said apertures being covered by the intermediate layer of the second portion, wherein the membrane layer and second portion are not bonded together where the membrane layer overlies the apertures such that those portions of the membrane layer which overlie the apertures are free to vibrate independently of the second portion in response to sound waves incident on the membrane layer.

Unfortunately, many of the lightweight solutions that have been proposed do not provide sufficient sound attenuation. There is, therefore, a need for improved sound attenuation systems which have less weight per unit area but also have good sound attenuation properties.

It is an aim of the present invention to address this need.

The present invention accordingly provides, in a first aspect, a sound attenuation sheet as defined in claim 1.

A great advantage of the present invention is that acoustic cavities are not necessary in any of the layers of the sound attenuation sheet and yet attenuation is still excellent. This has advantages in production because it simplifies the manufacturing of the multi-layer sound attenuation sheet since no additional cavity forming steps are necessary.

Thus, each of the layers of the sound attenuation sheet are acoustically continuous (i.e. have substantially no intentionally introduced acoustic cavities).

The first sound absorption layer may comprise a foam (preferably an open-cell foam) but preferably comprises a partially lofted melt-blown non-woven textile. Usually, the first sound absorption layer will have a loft in the range 0.5 to 20 mm, preferably 1 to 10 mm. The first absorption layer will usually be formed of one or more polymers, the or each polymer preferably being selected from a polyolefin (e.g. polypropylene, polyethylene), polyamide, or polyester (e.g. polyethylene terephthalate, PET or polybutylene terephthalate, PBT), preferably polypropylene.

The second sound absorption layer may comprise a foam (preferably an open-cell foam) but, preferably, comprises a lofted air-laid or cross-laid thermally bonded nonwoven textile (which may also be known as wadding). The second absorption layer will usually have a loft in the range 2 to 80 mm, preferably 5 to 50 mm. The second sound absorption layer is preferably formed from binder fibres (especially low temperature binder fibres) and staple fibres comprising a polymer selected from one or more of polyolefin (e.g. polypropylene, polyethylene), polyamide, or polyester (e.g. polyethylene terephthalate, PET), preferably PET.

The sheet may further comprise a second air permeable outer layer. The first and second air permeable outer layers may be tightly woven fabrics, but preferably comprise spun-bond - melt-blown - spun-bond (SMS) or spun-bond nonwoven textiles. The first and second air permeable outer layers may independently comprise one or more polymers selected from polyolefin

(e.g. polypropylene, polyethylene), polyamide, or polyester (e.g. polyethylene terephthalate, PET; polybutylene terephthalate, PBT), preferably polypropylene or PET.

The first air permeable outer layer may have a basis weight in the range 40 to 200 g/m². The second air permeable outer layer may have a basis weight in the range 20 to 150 g/m².

The air-impermeable film will usually comprise a thermoplastic polymer and may be either a monolayer film or a multilayer film. The air-impermeable film may comprise a thermoplastic polymer selected from polyolefin (e.g. polypropylene, polyethylene), thermoplastic polyurethane, polyamide, or polyester (e.g. polyethylene terephthalate), preferably polypropylene or thermoplastic polyurethane. The air-impermeable film will usually have a basis weight of 10 to 200 g/m², preferably 20 to 150 g/m².

In a second aspect, the present invention provides a sound attenuation sheet as described above, further comprising a second air permeable outer layer, wherein the layers and film are fixed together at one or more fixing portions and are able to move relative to each other at the portions that are not fixed.

Preferred and advantageous features of the first aspect, as described above, are also preferred and advantageous of the second aspect.

In both the first and second aspects, the fixing portions may be adhesive, welded or heat-fused fixing portions, optionally high frequency welded or discontinuously adhering portions (e.g. formed using dot or gravure printing, for example of adhesive). The preferred types of fixing portions are welded fixing portions.

Preferably, the fixing portions define the edges of one or more sound attenuation elements.

The sound attenuation sheet may form a single sound attenuation element if, for example, the fixing portions are on the periphery (preferably extending over substantially the whole periphery) of the sound attenuation sheet.

Alternatively, the sound attenuation sheet may comprise a plurality of sound attenuation elements.

The sound attenuation element or elements may be generally polygonal, for example generally rectangular, generally hexagonal, or generally triangular.

The overall basis weight of the sound attenuation sheet may in the range 400 to 600 g/m².

The sound attenuation sheet may comprise further layers. For example, a layer of adhesive web (preferably lightweight adhesive web) may be situated between one or more pair or each pair of layers during manufacture to help bind the layers together at the fixing portions only (e.g. during HF welding). Thus, a layer of adhesive web may be situated between one or more of the following pairs of layers: the first air permeable outer layer and the substantially air-impermeable film; the substantially air-impermeable film and the first sound absorption layer; the first sound absorption layer and the second sound absorption layer; the second sound absorption layer and the second air permeable outer layer.

In a third aspect, the present invention accordingly provides a method for producing a sound attenuation sheet, as defined in claim 13.

The sound attenuation sheet of the invention finds use in many areas where noise reduction is desirable. A particularly useful application is in vehicles, especially in automotive headliners, boot (truck) liners, hood (bonnet) liners, dash mats, interior panels, carpeting, rear bulkhead liners, parcel shelf acoustics, wheel arch liners, localised engine treatments, and decorative or functional vehicular facing layers.

Thus in a fourth aspect, the present invention provides a method for noise reduction, the method comprising providing a sound attenuation sheet according to the first or second aspect, and installing the sound attenuation sheet in a compartment of a vehicle subject to noise.

Embodiments of the present invention and examples not forming part of the present invention will now be described with reference to the following figures, in which:
Figure 1 shows a perspective view of a part of the sound attenuation sheet according to the invention (ADL sheet)
Figure 2 shows a schematic plan view of the sheet of Figure 1 showing sound attenuation elements defined by welded fixing portions fixing the layers of the sheet together.
Figure 3 (a) shows a schematic section through a two-layer sound attenuation sheet according to an example, Figure 3(b) shows a schematic section through a three-layer sound attenuation sheet according to an example, Figure 3 (c) shows a schematic section through a five-layer sound attenuation sheet according to the invention as also shown in Figure 1, Figure 3 (d) shows a schematic section through three-layer septum example.

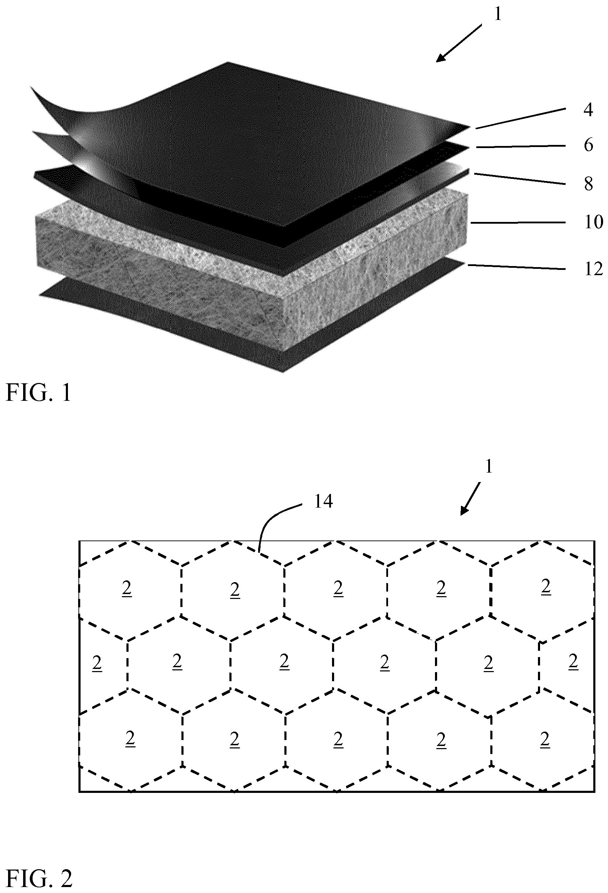

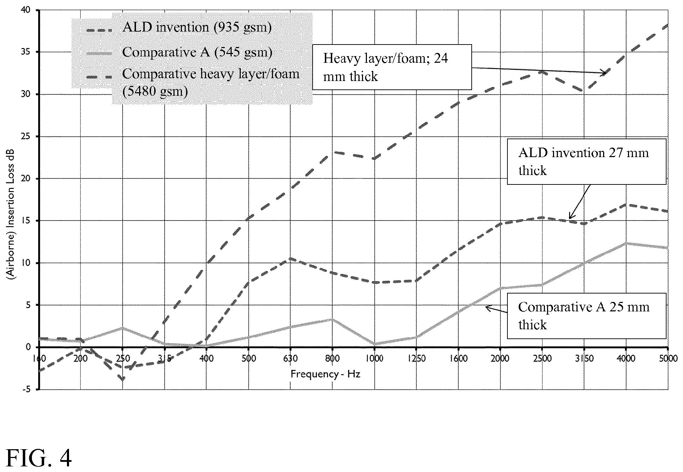

Figure 4 is an insertion loss chart comparing the performance of Comparative A (an absorption only product consisting of lofty polyester felt with an acoustic non-woven cover textile of PET, PP or PA) with 'heavy layer and foam' (a frequently used insulation product), and the ALD sheet according to the invention (as illustrated in Figure 1). Figure 4 contains insulation values derived from measuring the insertion loss. This is measured by applying the product to a 0.8 mm steel sheet which is radiating noise. The values reported ("insertion loss") are the difference in noise level measured with and without the acoustic product mounted to the sheet.

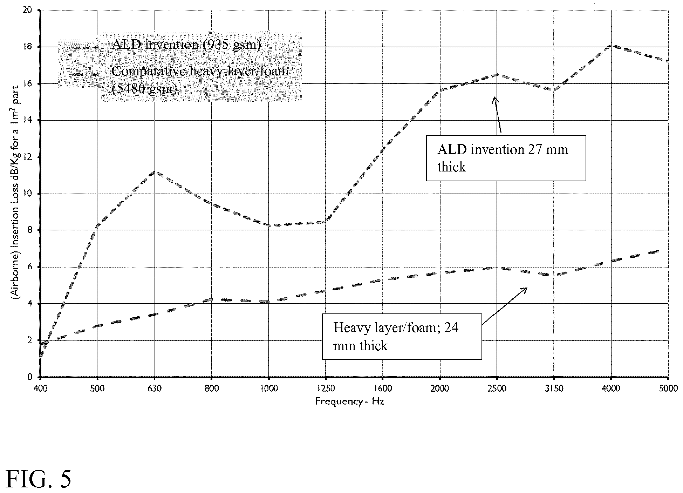

Figure 5 is a graph of insertion loss normalised by the product weight (in dB/kg). The inventive ADL sheet has far higher insulation to weight efficiency than the traditional acoustic heavy layer/foam comparative.

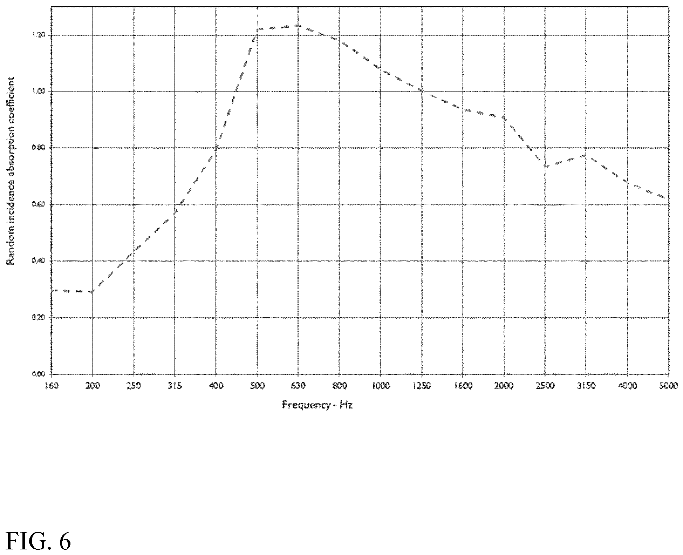

Figure 6 shows the wide acoustic absorption spread of ADL sheet with respect to frequency. Excellent, high absorption levels (>80 %) are exhibited between 400 Hz and 2200 Hz.

The sound attenuation sheet 1 as shown in Figure 1 consists of five layers. The first layer is an air permeable nonwoven, forming a first (upper) air permeable outer layer 4. The second layer comprises a substantially air impermeable film 6. The third layer is a first (upper) sound absorption layer 8 and comprises a dense partly lofted nonwoven with high airflow resistance. The fourth layer is second (lower) sound absorption layer 10 and comprises a thick, open nonwoven with low airflow resistance. The fifth layer is a second (lower) air permeable outer layer 12 and comprises an air permeable nonwoven. The function of the first, second and third layers 4, 6, 8 are to couple together to form a septum layer, spaced by the fourth layer 10, which still possess good transparency from the incident acoustic wave to allow absorption to occur in the third, fourth and fifth layers 8, 10, 12. Whilst the product will function as an acoustic absorber and acoustic isolator without loose film, substantial performance gains can be evidenced through its inclusion.

Typically the first layer 4 is a nonwoven SMS or spun bond, with a weight between 40 and 200 gsm (i.e. g/m²), although a tightly woven fabric would also suffice for acoustic function.

Typically the second layer 6 is a thermoplastic film of basis weight between 20 and 150 gsm.

Typically the third layer 8 is a semi-lofted melt blown nonwoven, with a weight between 100 and 1000 gsm and a loft between 1 and 10mm.

Typically the fourth layer 10 is a lofty air laid or cross laid thermally bonded wadding whose basis weight is between 100 and 1000 gsm and whose loft is between 5 and 50 mm.

Typically the fifth layer is a non-woven spun-bond - melt-blown - spun-bond (SMS) or spun-bond nonwoven textiles with a basis weight between 20 and 150 gsm.

The first and fifth layers would typically be of polypropylene or PET polymer chemistry, although other polymers would also be suitable for automotive use (e.g. polyethylene, PBT or polyamide)

The second layer is a typically a thermoplastic mono or multilayer film of polypropylene or thermoplastic PU, although again other polymers would also be suitable (e.g. PET, polyamide or polyethylene)

The third layer is a partially lofted melt blown non-woven typically of polypropylene construction, although other polymers would be suitable (e.g. PBT or polyamide or polyethylene).

The fourth layer is a lofted thermally bonded non-woven, typically using PET staple fibres with low temperature binder fibres. However, polyethylene or polypropylene or polyamide could instead or also be used.

The layers are compiled so that they are loose and not bonded over their whole area. This gives the advantage of movement within the layers to aid sound absorption. Preferably the layers are bound together at the edges of the component using high frequency welded or heat fused joins. Alternatively, the film can be adhered using a discontinuous film adhesion technique such as dot or gravure printing.

Figure 2 shows schematically a sound attenuation sheet 1 with a plurality of sound attenuation elements 2 defined by weld lines 14 forming fixing portions around their edges. The weld lines are produced by high frequency welding through the layers and film.

Alternatively, the sound attenuation sheet may have fixing portions around its periphery, forming in effect a single sound attenuation element.

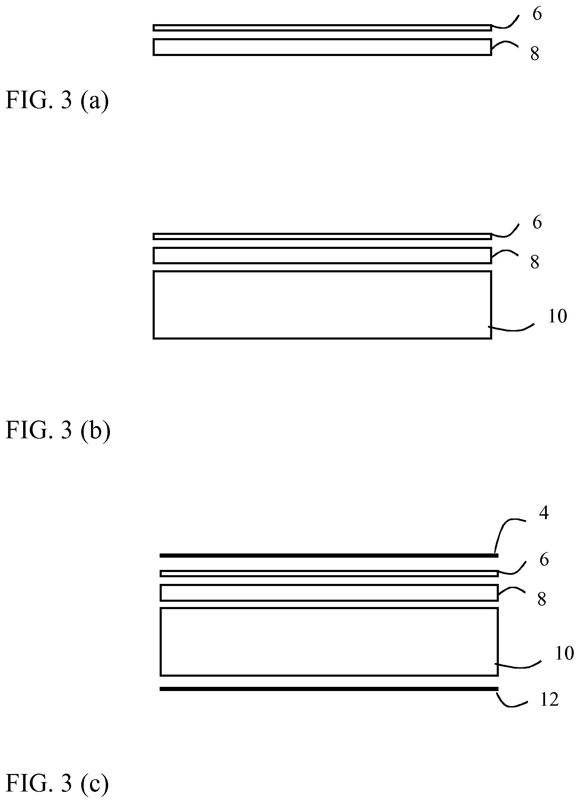

Figure 3(a) shows a schematic section through a two-layer example consisting of air impermeable film 6 and first (upper) sound absorption layer 8.

Figure 3(b) shows a schematic section through an three-layer example of air impermeable film 6, first (upper) sound absorption layer 8 and second (lower) sound absorption layer 10.

Figure 3(c) shows a schematic section through the inventive ALD sheet as also shown in Figure 1.

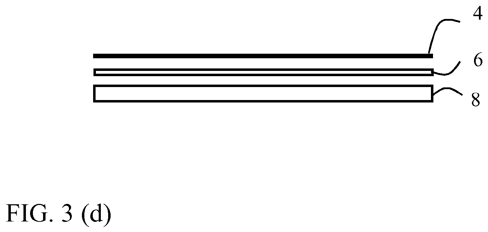

Figure 3(d) shows a schematic section through three-layer septum example consisting of air permeable outer layer 4, air impermeable film 6, and first (upper) sound absorption layer 8.

In each of Figures 3(a), (b), (c) and (d), the layers are fixed together at one or more fixing portions (not shown in Figure 3, see Figure 2) and are able to move relative to each other at the portions that are not fixed thereby significantly improve sound attenuation.

A great advantage of layer structure of the multilayer structure of the invention is that acoustic cavities are not necessary in any of the layers of the sound attenuation sheet and yet attenuation is still excellent. This has advantages in production because it simplifies the manufacturing of the multi-layer sound attenuation sheet since no additional cavity forming steps are necessary. Thus each of the layers of the sound attenuation sheet in the illustrated embodiments are substantially acoustically continuous (i.e. have substantially no intentionally introduced acoustic cavities).

### Reference Numerals

- 1: sound attenuation sheet
- 2: sound attenuation element
- 4: first (upper) air permeable outer layer
- 6: air impermeable film
- 8: first (upper) sound absorption layer
- 10: second (lower) sound absorption layer
- 12: second (lower) air permeable outer layer
- 14: weld lines

## Claims

1. A sound attenuation sheet (1) comprising a first air permeable outer layer (4), an air-impermeable film (6) next to the first air permeable outer layer (4), a first sound absorption layer (8) next to the air-impermeable film (6), and a second sound absorption layer (10) next to the first sound absorption layer (8), each of the first air permeable outer layer (4), the air-impermeable film (6), the first sound absorption layer (8) and the second sound absorption layer (10) being acoustically continuous and having one or more corresponding fixing portions (14) and one or more corresponding not-fixed portions, the second sound absorption layer (10) having a lower airflow resistance than the first sound absorption layer (8), the first air permeable outer layer (4), the air-impermeable film (6), the first sound absorption layer (8), and the second sound absorption layer (10) being fixed together at the one or more fixing portions (14) **characterized in that**
the layers of the first air permeable outer layer (4), the air-impermeable film (6), the first sound absorption layer (8) and the second sound absorption layer (10) are compiled so that they are loose and the not-fixed portions of each of the first air permeable outer layer (4), the air-impermeable film (6), the first sound absorption layer (8) and the second sound absorption layer (10) are able to move relative to each other.

2. A sound attenuation sheet as claimed in claim 1, wherein the fixing portions (14) define the edges of a plurality of sound attenuation elements (2).

3. A sound attenuation sheet as claimed in claim 2, wherein the sound attenuation elements (2) are generally polygonal.

4. A sound attenuation sheet as claimed in any one of the preceding claims, wherein the first sound absorption layer (8) comprises a foam or a partially lofted melt-blown non-woven textile, and/or wherein the second sound absorption layer (10) comprises a foam or a lofted air-laid or cross-laid thermally bonded nonwoven textile.

5. A sound attenuation sheet as claimed in any one of the preceding claims, wherein the first absorption layer (8) comprises a polymer selected from a polyolefin, polyamide, or polyester.

6. A sound attenuation sheet as claimed in any one of the preceding claims, wherein the second sound absorption layer (10) is formed from binder fibres and staple fibres comprising a polymer selected from polyolefin, polyamide, or polyester.

7. A sound attenuation sheet as claimed in any one of the preceding claims, further comprising a second air permeable outer layer (12).

8. A sound attenuation sheet as claimed in claim 7, wherein the first and second air permeable outer layers (4,12) independently comprise spun-bond - melt-blown - spun-bond (SMS) or spun-bond nonwoven textiles.

9. A sound attenuation sheet as claimed in either claim 7 or claim 8, wherein the first and second air permeable outer layers (4,12) independently comprise a polymer selected from polyolefin, polyamide, or polyester.

10. A sound attenuation sheet as claimed in any one of the preceding claims, wherein the air-impermeable film (6) comprises a thermoplastic polymer, optionally, selected from polyolefin, thermoplastic polyurethane, polyamide, or polyester.

11. A sound attenuation sheet as claimed in any one of claims 1 to 10, the sheet further comprising a second air permeable outer layer (12), wherein the layers and film are fixed together at one or more fixing portions and are able to move relative to each other at the portions that are not fixed.

12. A sound attenuation sheet as claimed in any one of the preceding claims, wherein the fixing portions are adhesive, welded or heat-fused fixing portions.

13. A method for producing a sound attenuation sheet, the method comprising:
(a) providing a first air permeable outer layer (4), an air-impermeable film (6), a first sound absorption layer (8), and a second sound absorption layer (10), each of the first air permeable outer layer (4), the air-impermeable film (6), the first sound absorption layer (8) and the second sound absorption layer (10) being acoustically continuous and having one or more corresponding fixing portions and one or more corresponding not fixed portions, the second sound absorption layer (10) having a lower airflow resistance than the first sound absorption layer (8),
(b) assembling the first air permeable outer layer (4), the air-impermeable film (6) next to the first air permeable outer layer (4), the first sound absorption layer (8) next to the air-impermeable film (6), and the second sound absorption layer (10) next to the first sound absorption layer (8) so that they overlap, and
(c) fixing the first air permeable outer layer (4), the air impermeable film (6), the first sound absorption layer (8) and the second sound absorption layer (10) at the one or more fixing portions, **characterised in that** the layers of the first air permeable outer layer (4), the air impermeable film (6), the first sound absorption layer (8) and the second sound absorption layer (10) are compiled so that they are loose and the not-fixed portions of each of the first air permeable outer layer (4), the air-impermeable film (6), the first sound absorption layer (8) and the second sound absorption layer (10) are able to move relative to each other.

14. A method for noise reduction, the method comprising providing a sound attenuation sheet as claimed in any one of claims 1 to 12 and installing the sound attenuation sheet in a compartment of a vehicle or machine enclosure subject to noise.

## Patentansprüche

1. Schalldämpfungsbogen (1), der eine erste luftdurchlässige Außenschicht (4), eine luftundurchlässige Folie (6) neben der ersten luftdurchlässigen Außenschicht (4), eine erste Schallabsorptionsschicht (8) neben der luftundurchlässigen Folie (6) und eine zweite Schallabsorptionsschicht (10) neben der ersten Schallabsorptionsschicht (8) umfasst, wobei die erste luftdurchlässige Außenschicht (4), die luftundurchlässige Folie (6), die erste Schallabsorptionsschicht (8) und die zweite Schallabsorptionsschicht (10) jeweils akustisch zusammenhängend sind und einen oder mehrere entsprechende Befestigungsabschnitte (14) und einen oder mehrere entsprechende nicht befestigte Abschnitte aufweisen, wobei die zweite Schallabsorptionsschicht (10) einen geringeren Luftströmungswiderstand als die erste Schallabsorptionsschicht (8) aufweist, wobei die erste luftdurchlässige Außenschicht (4), die luftundurchlässige Folie (6), die erste Schallabsorptionsschicht (8) und die zweite Schallabsorptionsschicht (10) an dem einen oder den mehreren Befestigungsabschnitten (14) aneinander befestigt sind, **dadurch gekennzeichnet, dass**
die Schichten der ersten luftdurchlässigen Außenschicht (4), der luftundurchlässigen Folie (6), der ersten Schallabsorptionsschicht (8) und der zweiten Schallabsorptionsschicht (10) so zusammengesetzt sind, dass sie lose sind und die nicht befestigten Abschnitte der ersten luftdurchlässigen Außenschicht (4), der luftundurchlässigen Folie (6), der ersten Schallabsorptionsschicht (8) und der zweiten Schallabsorptionsschicht (10) jeweils fähig sind, sich in Bezug auf einander zu bewegen.

2. Schalldämpfungsbogen nach Anspruch 1, wobei die Befestigungsabschnitte (14) die Kanten einer Vielzahl von Schalldämpfungselementen (2) definieren.

3. Schalldämpfungsbogen nach Anspruch 2, wobei die Schalldämpfungselemente (2) im Allgemeinen polygonal sind.

4. Schalldämpfungsbogen nach einem der vorstehenden Ansprüche, wobei die erste Schallabsorptionsschicht (8) einen Schaumstoff oder einem teilweise aufgelockerten schmelzgeblasenen Vliesstoff umfasst und/oder wobei die zweite Schallabsorptionsschicht (10) einen Schaumstoff oder einen aufgelockerten luftgelegten oder kreuzgelegten thermisch gebundenen Vliesstoff umfasst.

5. Schalldämpfungsbogen nach einem der vorstehenden Ansprüche, wobei die erste Absorptionsschicht (8) ein Polymer umfasst, ausgewählt aus Polyolefin, Polyamid oder Polyester.

6. Schalldämpfungsbogen nach einem der vorstehenden Ansprüche, wobei die zweite Schallabsorptionsschicht (10) aus Bindefasern und Stapelfasern gebildet ist, die ein Polymer umfassen, ausgewählt aus Polyolefin, Polyamid oder Polyester.

7. Schalldämpfungsbogen nach einem der vorstehenden Ansprüche, die weiter eine zweite luftdurchlässige Außenschicht (12) umfasst.

8. Schalldämpfungsbogen nach Anspruch 7, wobei die erste und die zweite luftdurchlässige Außenschicht (4,12) unabhängig voneinander Spinnvlies-, Schmelzblas- und Spinnvlies- (SMS) oder Spinnvlies-Vliesstoffen umfassen.

9. Schalldämpfungsbogen nach Anspruch 7 oder 8, wobei die erste und die zweite luftdurchlässige Außenschicht (4,12) unabhängig voneinander ein Polymer umfassen, ausgewählt aus Polyolefin, Polyamid oder Polyester.

10. Schalldämpfungsbogen nach einem der vorstehenden Ansprüche, wobei die luftundurchlässige Folie (6) ein thermoplastisches Polymer umfasst, wahlweise ausgewählt aus Polyolefin, thermoplastischem Polyurethan, Polyamid oder Polyester.

11. Schalldämpfungsbogen nach einem der Ansprüche 1 bis 10, wobei der Bogen weiter eine zweite luftdurchlässige Außenschicht (12) umfasst, wobei die Schichten und die Folie an einem oder mehreren Befestigungsabschnitten aneinander befestigt sind und fähig sind, sich an den Abschnitten, die nicht befestigt sind, in Bezug aufeinander zu bewegen.

12. Schalldämpfungsbogen nach einem der vorstehenden Ansprüche, wobei die Befestigungsabschnitte anheftende, geschweißte oder heißverschmolzene Befestigungsabschnitte sind.

13. Verfahren zur Herstellung eines Schalldämpfungsbogens, wobei das Verfahren Folgendes umfasst:
(a) Bereitstellen einer ersten luftdurchlässigen Außenschicht (4), einer luftundurchlässigen Folie (6), einer ersten Schallabsorptionsschicht (8) und einer zweiten Schallabsorptionsschicht (10), wobei die erste luftdurchlässige Außenschicht (4), die luftundurchlässige Folie (6), die erste Schallabsorptionsschicht (8) und die zweite Schallabsorptionsschicht (10) jeweils akustisch durchgehend sind und einen oder mehrere entsprechende Befestigungsabschnitte und einen oder mehrere entsprechende nicht befestigte Abschnitte aufweisen, wobei die zweite Schallabsorptionsschicht (10) einen geringeren Luftströmungswiderstand aufweist als die erste Schallabsorptionsschicht (8),
(b) Zusammenfügen der ersten luftdurchlässigen Außenschicht (4), der luftundurchlässigen Folie (6) neben der ersten luftdurchlässigen Außenschicht (4), der ersten Schallabsorptionsschicht (8) neben der luftundurchlässigen Folie (6) und der zweiten Schallabsorptionsschicht (10) neben der ersten Schallabsorptionsschicht (8), sodass sie sich überlappen, und
(c) Befestigen der ersten luftdurchlässigen Außenschicht (4), der luftundurchlässigen Folie (6), der ersten Schallabsorptionsschicht (8) und der zweiten Schallabsorptionsschicht (10) an dem einen oder den mehreren Befestigungsabschnitten, **dadurch gekennzeichnet, dass** die Schichten der ersten luftdurchlässigen Außenschicht (4), der luftundurchlässigen Folie (6), der ersten Schallabsorptionsschicht (8) und der zweiten Schallabsorptionsschicht (10) so zusammengesetzt sind, dass sie lose sind und die nicht befestigten Abschnitte der ersten luftdurchlässigen Außenschicht (4), der luftundurchlässigen Folie (6), der ersten Schallabsorptionsschicht (8) und der zweiten Schallabsorptionsschicht (10) jeweils fähig sind, sich in Bezug aufeinander zu bewegen.

14. Verfahren zur Lärmreduzierung, wobei das Verfahren Bereitstellen eines Schalldämpfungsbogens nach einem der Ansprüche 1 bis 12 und Installieren des Schalldämpfungsbogens in einem Abteil eines Fahrzeugs oder einer Maschinenumhausung umfasst, die Lärm ausgesetzt sind.

## Revendications

1. Feuille d'atténuation sonore (1) comprenant une première couche extérieure perméable à l'air (4), un film imperméable à l'air (6) adjacent à la première couche extérieure perméable à l'air (4), une première couche d'absorption sonore (8) adjacente au film imperméable à l'air (6) et une seconde couche d'absorption sonore (10) adjacente à la première couche d'absorption sonore (8), chacun de la première couche extérieure perméable à l'air (4), du film imperméable à l'air (6), de la première couche d'absorption sonore (8) et de la seconde couche d'absorption sonore (10) étant acoustiquement continu et présentant une ou plusieurs parties de fixation correspondantes (14) et une ou plusieurs parties non fixées correspondantes, la seconde couche d'absorption sonore (10) présentant une résistance à l'écoulement d'air inférieure à celle de la première couche d'absorption sonore (8), la première couche extérieure perméable à l'air (4), le film imperméable à l'air (6), la première couche d'absorption sonore (8) et la seconde couche d'absorption sonore (10) étant fixés ensemble au niveau des une ou plusieurs parties de fixation (14), **caractérisée en ce que**
les couches de la première couche extérieure perméable à l'air (4), du film imperméable à l'air (6), de la première couche d'absorption sonore (8) et de la seconde couche d'absorption sonore (10) sont compilées de sorte qu'elles soient lâches et que les parties non fixées de chacune de la première couche extérieure perméable à l'air (4), du film imperméable à l'air (6), de la première couche d'absorption sonore (8) et de la seconde couche d'absorption sonore (10) soient capables de se déplacer les unes par rapport aux autres.

2. Feuille d'atténuation sonore selon la revendication 1, dans laquelle les parties de fixation (14) définissent les bords d'une pluralité d'éléments d'atténuation sonore (2).

3. Feuille d'atténuation sonore selon la revendication 2, dans laquelle les éléments d'atténuation sonore (2) sont généralement polygonaux.

4. Feuille d'atténuation sonore selon l'une quelconque des revendications précédentes, dans laquelle la première couche d'absorption sonore (8) comprend une mousse ou un textile non tissé partiellement gonflé par fusion-soufflage, et/ou dans laquelle la seconde couche d'absorption sonore (10) comprend une mousse ou un textile non tissé thermolié gonflé par dépôt à l'air ou par dépôt croisé.

5. Feuille d'atténuation sonore selon l'une quelconque des revendications précédentes, dans laquelle la première couche d'absorption (8) comprend un polymère choisi parmi une polyoléfine, un polyamide ou un polyester.

6. Feuille d'atténuation sonore selon l'une quelconque des revendications précédentes, dans laquelle la seconde couche d'absorption sonore (10) est formée de fibres liantes et de fibres discontinues comprenant un polymère choisi parmi la polyoléfine, le polyamide ou le polyester.

7. Feuille d'atténuation sonore selon l'une quelconque des revendications précédentes, comprenant en outre une seconde couche extérieure perméable à l'air (12).

8. Feuille d'atténuation sonore selon la revendication 7, dans laquelle les première et seconde couches extérieures perméables à l'air (4, 12) comprennent indépendamment des textiles non tissés filés-liés-fondus-soufflés-filés-liés (SMS) ou filés-liés.

9. Feuille d'atténuation sonore selon la revendication 7 ou la revendication 8, dans laquelle les première et seconde couches extérieures perméables à l'air (4, 12) comprennent indépendamment un polymère choisi parmi la polyoléfine, le polyamide ou le polyester.

10. Feuille d'atténuation sonore selon l'une quelconque des revendications précédentes, dans laquelle le film imperméable à l'air (6) comprend un polymère thermoplastique, éventuellement choisi parmi la polyoléfine, le polyuréthane thermoplastique, le polyamide ou le polyester.

11. Feuille d'atténuation sonore selon l'une quelconque des revendications 1 à 10, la feuille comprenant en outre une seconde couche extérieure perméable à l'air (12), dans laquelle les couches et le film sont fixés ensemble au niveau d'une ou plusieurs parties de fixation et sont capables de se déplacer l'un par rapport à l'autre au niveau des parties qui ne sont pas fixées.

12. Feuille d'atténuation sonore selon l'une quelconque des revendications précédentes, dans laquelle les parties de fixation sont des parties de fixation adhésives, soudées ou thermofusibles.

13. Procédé de production d'une feuille d'atténuation sonore, le procédé comprenant :
(a) la fourniture d'une première couche extérieure perméable à l'air (4), d'un film imperméable à l'air (6), d'une première couche d'absorption sonore (8) et d'une seconde couche d'absorption sonore (10), chacun de la première couche extérieure perméable à l'air (4), du film imperméable à l'air (6), de la première couche d'absorption sonore (8) et de la seconde couche d'absorption sonore (10) étant acoustiquement continu et présentant une ou plusieurs parties de fixation correspondantes et une ou plusieurs parties non fixées correspondantes, la seconde couche d'absorption sonore (10) présentant une résistance à l'écoulement d'air inférieure à celle de la première couche d'absorption sonore (8),
(b) l'assemblage de la première couche extérieure perméable à l'air (4), du film imperméable à l'air (6) adjacent à la première couche extérieure perméable à l'air (4), de la première couche d'absorption sonore (8) adjacente au film imperméable à l'air (6) et de la seconde couche d'absorption sonore (10) adjacente à la première couche d'absorption sonore (8) de sorte qu'ils se chevauchent, et
(c) la fixation de la première couche extérieure perméable à l'air (4), du film imperméable à l'air (6), de la première couche d'absorption sonore (8) et de la seconde couche d'absorption sonore (10) au niveau des une ou plusieurs parties de fixation, **caractérisé en ce que** les couches de la première couche extérieure perméable à l'air (4), du film imperméable à l'air (6), de la première couche d'absorption sonore (8) et de la seconde couche d'absorption sonore (10) sont compilées de sorte qu'elles soient lâches et que les parties non fixées de chacune de la première couche extérieure perméable à l'air (4), du film imperméable à l'air (6), de la première couche d'absorption sonore (8) et de la seconde couche d'absorption sonore (10) soient capables de se déplacer les unes par rapport aux autres.

14. Procédé de réduction du bruit, le procédé comprenant la fourniture d'une feuille d'atténuation sonore selon l'une quelconque des revendications 1 à 12 et l'installation de la feuille d'atténuation sonore dans un compartiment d'un véhicule ou d'une enceinte de machine soumis au bruit.
